# EUROPÄISCHE PATENTSCHRIFT

(11) **EP 0 962 784 B1**
(45) Veröffentlichungstag und Bekanntmachung des Hinweises auf die Patenterteilung: **17.07.2002**
(21) Anmeldenummer: 99108392.4
(22) Anmeldetag: 29.04.1999
(51) Int. Cl.: G01S 3/808

(54) **Verfahren zur passiven Bestimmung von Zieldaten**
Method of passively determining target data
Procédé passif de détermination de données de cibles

(30) Priorität: 05.06.1998 DE 19825271
(43) Veröffentlichungstag der Anmeldung: 08.12.1999
(73) Patentinhaber: STN ATLAS Elektronik GmbH, 28309 Bremen (DE)
(72) Erfinder: Arens, Egidius, 28832 Achim (DE)
(74) Vertreter: Thul, Hermann, Dipl.-Phys.

(56) Entgegenhaltungen:
- EP-A- 0 642 032
- US-A- 4 480 322
- US-A- 4 910 719

## Beschreibung

Die Erfindung betrifft ein Verfahren zur passiven Bestimmung von Zieldaten eines schallabstrahlenden Fahrzeuges, der im Oberbegriff des Anspruchs 1 genannten Art.

Zur Ortung von Fahrzeugen, z.B. Oberflächenschiffen oder U-Booten, werden linienförmige Wandler an Ordnungen eingesetzt, die Fahrgeräusche von Fahrzeugen, ggf. Sonarimpulse und Umgebungsgeräusche empfangen. Die linienförmige Wandleranordnung besteht z.B. aus äquidistant nebeneinander aufgereihten, elektroakustischen Wandlern, die an der Längsseite eines U-Bootes als sogenanntes Flank-Array angeordnet sind. Mit einer zugehörigen Peilanlage werden Richtcharakteristiksignale zum Bestimmen der Einfallsrichtung einfallender Schallwellen gebildet und bei Detektion eine Peilung zum schallabstrahlenden Fahrzeug angegeben.

Zum zusätzlichen Bestimmen der Entfernung des Fahrzeuges ist aus der US-PS 4 910 719 eine Wandleranordnung bekannt, bei der drei Sensoren in vorgegebenem Abstand zueinander längs einer Linie an der Seite des U-Bootes angeordnet sind. Jede gekrümmte Wellenfront einfallender Schallwellen erreicht die drei Sensoren mit Zeitdifferenzen, die abhängig von der Entfernung des Fahrzeugs und der Einfallsrichtung der Schallwellen, also der Peilung zum Fahrzeug, sind. Aus den durch Korrelation ermittelten Zeitdifferenzen wird der Ort des Fahrzeuges, nämlich seine Entfernung und Peilung, ermittelt. Eine andere dort aufgezeigte Methode sieht vor, die Empfangssignale der Sensoren durch Verzögern und Addieren auf einen Ort zu fokussieren und zu einer Ortsfunktion zu integrieren. Diese Ortsfunktion wird für alle möglichen Schalleinfallsrichtungen und Entfernungen von der Schallquelle gebildet und ihr Maximum bestimmt, das der Peilung und Entfernung des schallabstrahlenden Fahrzeuges zugeordnet wird. Der Aufwand wird dadurch reduziert, daß Fokussierung und Richtungsbildung aus drei Korrelationsfunktionen der Empfangssignale der drei Sensoren ermittelt werden und die eine der beiden Korrelationsfunktionen auf der Zeitachse verschoben, gespiegelt und zu der anderen Korrelationsfunktion addiert wird.

Aus derjenigen Verschiebung, die zu einem Maximum bei der Addition führt, werden die Zieldaten des Fahrzeuges ermittelt. Das Verfahren arbeitet um so genauer, je größer die Abstände zwischen den drei Sensoren sind; es versagt, wenn die Empfangssignale wegen des großen Abstandes der drei Sensoren nicht mehr kohärent sind.

Es ist Aufgabe der vorliegenden Erfindung, ein Verfahren der im Oberbegriff des Anspruchs 1 genannten Art zu schaffen, bei dem die gleiche mit Wandlern komplett belegte, linienförmige Wandleranordnung und der gleiche Richtungsbildner der bereits an Bord befindlichen Peilanlage eingesetzt und die Bestimmung von Peilung und Entfernung mit der gleichen Signalverarbeitung durchgeführt werden, so daß die Genauigkeit der Peilung auch für die Entfernungsbestimmung ausgenutzt werden kann. Diese Aufgabe wird erfindungsgemäß durch die Merkmale im Kennzeichenteil des Anspruchs 1 gelöst.

An Bord eines beobachtenden Trägerfahrzeuges, z.B. U-Boots, befinden sich üblicherweise mehrere Wandleranordnungen zum Bestimmen unterschiedlicher Zieldaten von Fahrzeugen, die abhängig von ihren Empfangsfrequenzbereichen dimensioniert und konfiguriert sind. Es gibt zwei linienförmige Wandleranordnungen an den beiden Längsseiten des U-Bootes, eine für ein PRS - "Passive Ranging Sonar" - zur passiven Entfernungsbestimmung mit jeweils drei Sensoren, wie z.B. in der genannten US-Patentschrift, und eine zweite für ein FAS-"Flank Array Sonar" - zum Bestimmen der Peilrichtung. Der Vorteil des erfingundsgemäßen Verfahrens besteht darin, daß anstelle des PRS die zum FAS gehörende Wandleranordnung auch zur passiven Entfernungsbestimmung eingesetzt wird, nachdem ein Fahrzeug mit dem FAS detektiert und seine Peilung bestimmt wurde.

Empfangssignale einer Gruppe von Wandlern des FAS werden durch Laufzeit und/oder Phasenkompensation wie bei der Richtungsbestimmung erfindungsgemäß fokussiert, so daß die Brennpunkte der Fokussignale in vorgebbaren Abständen auf einem Peilstrahl zum Fahrzeug liegen, der mit dem Richtungsbildner bestimmt wurde. Das größte Fokussignal gibt den Ort des Ziels an. Ein Vorteil besteht darin, daß nicht nur die gleiche Wandleranordnung, sondern auch die gleiche Signalverarbeitung wie zum Bilden der Richtcharakteristiksignale auch zum Bilden der Fokussignale eingesetzt wird. Weiterhin ist vorteilhaft, daß der Mehraufwand gering ist, da nur auf einem einzigen Peilstrahl in Peilrichtung zum Fahrzeug die Brennpunkte aufgereiht werden und durch einen Größenvergleich der Fokussignale der Zielort bestimmt wird.

Da die Wandler auf dem Flank Array des FAS äquidistant in Abständen kleiner als die halbe Wellenlänge des Empfangsfrequenzbereichs angeordnet sind, gibt es auch auf Peilstrahlen, die Winkel zur Querabrichtung aufweisen, keine Grating Lobes, so daß in einem seitlichen Winkelbereich von nahezu 180° die Peilung und somit auch die Fokussierung eindeutig ist. Die Länge der Wandleranordnung und die Dichte der Wandlerbelegung sorgen für Richtcharakteristiken großer Richtschärfe und nahezu punktförmiger Fokussierung bei guter Nebenzipfeldämpfung, so daß eine exakte und eindeutige Ortsbestimmung möglich ist. Der ganz besondere Vorteil besteht jedoch darin, daß die Reichweite wesentlich größer ist als bei dem PRS, da der Empfangsfrequenzbereich des FAS, der wesentlich tiefer als bei dem PRS liegt, auch in seinen tiefen Frequenzen ausgenutzt werden kann. Mit der ersten Detektion eines Fahrzeuges kann aus der gleichen Eigenposition nicht nur die Peilung, sondern auch die Entfernung passiv bestimmt werden, da Fahrzeugmanöver wie bei einer auf Kreuzpeilung beruhenden Entfernungsbestimmung nicht gefahren werden müssen.

Außerdem ist es vorteilhaft, daß eine Vorverarbeitung der Empfangssignale oder der gebildeten Fokussignale nach dem Demonverfahren, bei dem das empfangene Fahrgeräusch nach einer Bandpaßfilterung demoduliert wird, auch zum Bestimmen der Entfernung eingesetzt werden kann. Die Demonanalyse beim FAS dient der Klassifizierung und Unterscheidung von Fahrzeugen. Ihre Anwendung im Zusammenhang mit der Fokussierung gemäß dem erfindungsgemäßen Verfahren nach Anspruch 1 bietet die entscheidenden Vorteile, daß eine frequenzmäßige Trennung und dadurch bedingte Unterscheidbarkeit von Zielen möglich wird und daß aufgrund der Bandpaßfilterung eine Verbesserung des Nutz-/Störverhältnisses zu verzeichnen ist.

Außer der Demonanalyse ist in dem o.a. Artikel auch eine Vorverarbeitung der Empfangssignale nach dem Lofar-Verfahren angegeben. Im tieffrequenten Bereich des Empfangsfrequenzspektrums werden bei der Lofar-Verarbeitung Spektrallinien analysiert, die durch Betriebsaggregate oder Hilfsmaschinen an Bord des zu ortenden Fahrzeuges verursacht werden. Bei Detektion einer solchen Spektrallinie besteht der Vorteil bei dem erfindungsgemäßen Verfahren nach Anspruch 1, daß die Fokussierung nur bei dieser einen zugehörigen Frequenz durchgeführt wird, wodurch eine Zieltrennung und Zielverfolgung in einfacher Weise möglich wird, die auch bei Zielkeuzungen im Nahbereich eine Unterscheidung der Ziele erlaubt und somit eine Peilungs- und Entfernungsbestimmung mit geringer Falschalarmrate ermöglicht.

Gemäß dem erfingundsgemäßen Verfahren nach Anspruch 1 wird entweder, abhängig von einem Winkelsektor, in den die Peilrichtung fällt, eine Gruppe aus der Vielzahl aller Wandler zum Bilden der Fokussignale ausgewählt, deren Krümmungsradien den Peilstrahl in benachbarten Brennpunkten schneiden, oder es werden sämtliche Wandler zu einer Gruppe zusammengefaßt. Der Vorteil der Auswahl der Gruppe besteht darin, daß spitzwinklige Schnittpunkte vermieden werden können.

Bei der vorteilhaften Weiterbildung des erfindungsgemäßen Verfahrens nach Anspruch 2 wird als linienförmige Wandleranordnung eine Schleppantenne eines TAS - "Towed Array Sonar" - verwendet, die ebenfalls in dem o.g. Artikel gezeigt ist. Die Empfangsfrequenz des TAS liegt tiefer als des FAS, so daß die Reichweiten zur Detektion und Peilung und somit auch für die erfindungsgemäße Richtungsbestimmung noch größer sind.

Nach der vorteilhaften Weiterbildung des erfindungsgemäßen Verfahrens nach Anspruch 3 werden mehrere Gruppen jeweils aus einer Anzahl von Wandlern zu benachbarten Teilbasen zusammengefaßt. Für jede Teilbasis wird ein Teilfokussignal gebildet. Die Krümmungsradien der einzelnen so gebildeten Teilbasen schneiden den Peilstrahl in Peilrichtung in ihren Brennpunkten. Der Ort des Fahrzeuges wird dadurch ermittelt, daß die Teilfokussignale miteinander verglichen werden und das größte Teilfokussignal ausgewählt wird, dessen Brennpunkt den Radialabstand des Zielorts auf dem Peilstrahl angibt. Der Vorteil dieser Signalverarbeitung besteht insbesondere darin, daß durch den Vergleich der Teilfokussignale eine Mittelung vorgenommen wird. Durch die Mittelwertbildung gemäß Anspruch 4 wird eine zusätzliche Beruhigung einer Ortsanzeige erreicht.

Eine weitere Verbesserung der Ortsbestimmung erfolgt nach der vorteilhaften Weiterbildung des erfindungsgemäßen Verfahrens nach Anspruch 5 durch Bilden des Medians sämtlicher Radialabstände der größten Teilfokussignale, bei der "ausreißende" Meßergebnisse aus der Ortsbestimmung eliminiert werden.

Zur Glättung einer zeitlichen Ortsänderung des Fahrzeugs wird gemäß der vorteilhaften Weiterbildung des erfindungsgemäßen Verfahrens nach Anspruch 6 ein Gradient ermittelt. Es werden nacheinander ermittelte Radialabstände über der Zeit der Größe nach sortiert und der mittlere Radialabstand jeweils für zwei Zeitintervalle ausgewählt. Die Differenz dieser zwei Radialabstände wird durch das Zeitintervall geteilt und ergibt den Gradienten, der ein Maß für die Sicherheit der Ortsbestimmung ist. Der Gradient ist Null, wenn sich das Fahrzeug während des Zeitintervalls nicht in radialer Richtung bewegt hat. Der Gradient ist konstant bei konstanter radialer Geschwindigkeit des Fahrzeugs.

Gemäß der vorteilhaften Weiterbildung des erfindungsgemäßen Verfahrens nach Anspruch 7 gibt die Größe des Gradienten die radiale Geschwindigkeitskomponente des Fahrzeugs an. Da der Gradient durch Medianbildung der Radialabstände innerhalb zweier Zeitintervalle gewonnen wurde, enthält die Geschwindigkeitsangabe eine Mittelwertbildung oder Glättung und somit eine Störbefreiung.

Mit Hilfe des Gradienten ist außerdem gemäß der vorteilhaften Weiterbildung des erfindungsgemäßen Verfahrens nach Anspruch 8 zu jedem Zeitpunkt ohne Zeitverlust und großen Rechenaufwand aus dem zuletzt ermittelten Radialabstand der momentane Ort des Fahrzeugs bestimmbar, indem der Gradient mit einer Zeitspanne multipliziert wird, die seit der letzten Ortsermittlung vergangen ist. Dieses Produkt wird zu dem zuletzt ermittelten Ort des Fahrzeugs hinzu addiert und ergibt den momentanen Ort des Fahrzeugs.

Bei einer nordbezogenen Peilung wird der Radialabstand auf dem Peilstrich zum Fahrzeug in nordbezogene Komponenten zerlegt und in ein nordbezogenes Koordinatensystem eingetragen. Aus mehreren Ortsbestimmungen ist eine Kursbestimmung des Fahrzeugs möglich, so daß mit dem erfindungsgemäßen Verfahren sämtliche Zieldaten eines Fahrzeugs zur Verfügung stehen.

Das erfindungsgemäße Verfahren weist die Vorteile auf, daß auch schnell vorbeilaufende Fahrzeuge, die sich in geringer Entfernung befinden, exakt vermessen werden und daß Mehrzielsituationen erkannt werden, da Demon- und Lofar-Auswertungen, wie sie allgemein bekannt sind, ohne Mehraufwand angewendet werden können. Ebenso ist das Verfahren auf die Auswertung von Sonarimpulsen zur Ortsbestimmung erweiterbar, die von fremden Sonaranlagen abgestrahlt werden. Spezielle Eigenmanöver des beobachtenden Fahrzeugs sind für die Bestimmung der Zieldaten nicht notwendig, vielmehr kann aus einer einzigen Eigenposition heraus bereits der Ort des Fahrzeugs, seine Geschwindigkeit und sein Kurs bestimmt werden, wobei für die Entfernungsbestimmung eine einzige Peilung und Fokussierung ausreicht, während für die Geschwindigkeitsbestimmung zwei Messungen in einem vorgebbaren Zeitraum notwendig sind.

Die Erfindung ist anhand eines Ausführungsbeispiels zum passiven Bestimmen von Zieldaten eines schallabstrahlenden Fahrzeugs näher beschrieben. Es zeigen:
- Fig. 1: ein Blockschaltbild mit einer linienförmigen Wandleranordnung und
- Fig. 2: eine Ortungssituation.

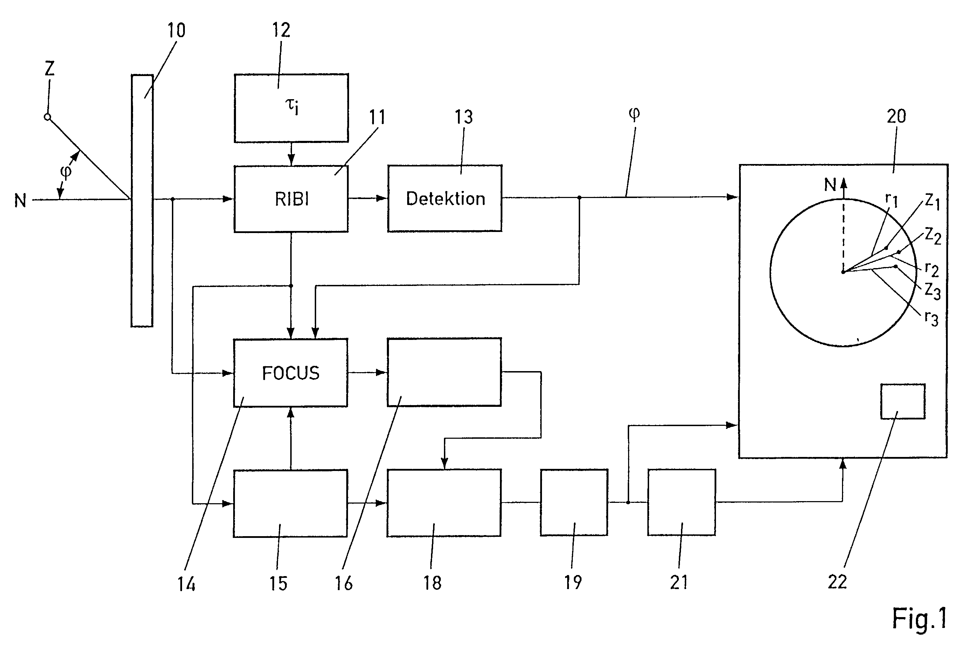

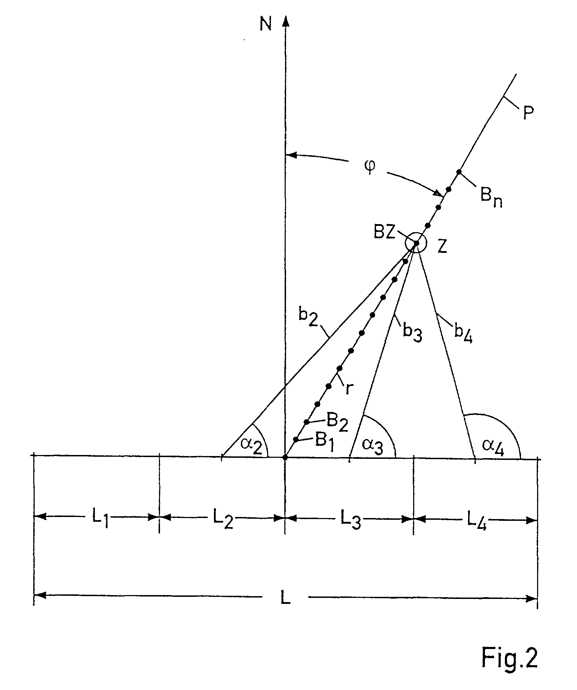

Peilung, Entfernung, Geschwindigkeit und Kurs eines Fahrzeugs werden mit einer erweiternden Peilanlage bestimmt, deren Blockschaltbild in Fig. 1 gezeigt ist. Empfangssignale von elektroakustischen Wandlern einer linearen Wandleranordnung 10 werden einem Richtungsbildner 11 zugeführt und mit Laufzeit - und/oder Phasenverzögerungen aus einem Richtungsgeber 12 zum Bilden von Richtcharakteristiksignalen beaufschlagt, die in unterschiedliche Richtungen weisen. In einem nachgeschalteten Detektor 13 wird unter einer Peilrichtung ϕ ein Fahrzeug detektiert und gepeilt. Der Richtungsbildner 11 und der Detektor 13 steuern einen Fokusbildner 14 an, der die Empfangssignale mit Laufzeit - und/oder Phasenverzögerungen aus einem Brennpunktgeber 15 zum Bilden von Fokussignalen oder Teilfokussignalen beaufschlagt, deren Brennpunkte B auf einem Peilstrahl P liegen, der in Peilrichtung ϕ weist, wie in Fig. 2 dargestellt.

Die Fokus- oder Teilfokussignale werden in einer Vergleichschaltung 16 miteinander verglichen. Das größte Fokussignal gibt den Ort Z des Fahrzeugs an, der im Brennpunkt BZ auf dem Peilstrahl P liegt.

Zum Bilden der Fokussignale werden Empfangssignale aller Wandler der Wandleranordnung 10 verwendet, die äquidistant über ihre Länge L verteilt sind. Teilfokussignale werden aus Empfangssignalen ausgesuchter Gruppen von Wandlern gebildet, die auf Teilbasislängen L2, L3, L4 liegen. Die Empfangssignale dieser Wandler werden so verzögert, daß ihre Brennpunkte B auf dem Peilstrahl P auf Strahlen b liegen, die unterschiedliche Winkel α zur Länge L der Wandleranordnung 10 aufweisen. Die Teilfokussignale jeder Teilbasis werden miteinander verglichen. Der Brennpunkt BZ des größten Teilfokussignals der Teilbasis mit der Teilbasislänge L2 liegt im Schnittpunkt des Strahls b₂ mit dem Peilstrahl P. Die Brennpunkte BZ der beiden anderen größten Teilfokussignale der Teilbasen auf den Teilbasislängen L3 und L4 liegen auf den Strahlen b₃ und b₄ mit dem Peilstrahl P. Die Brennpunkte BZ bestimmen den Ort Z des Fahrzeugs. Die zu den größten Teilfokussignalen gehörigen Strahlen b₂, b₃, b₄ und Winkel α₂, α₃, α₄ werden in einer Rechenschaltung 18 trigonometrisch miteinander verknüpft und liefern den Radialabstand r des Fahrzeugs auf dem Peilstrahl P unter der Peilrichtung ϕ.

In der Vergleichschaltung 16 wird ein Größenvergleich der Fokus- oder Teilfokussignale zur Ermittlung der Brennpunkte BZ durchgeführt. Ein Mittelwert und/oder ein Median der zu den Brennpunkten BZ gehörigen Radialabstände r wird in einer der Rechenschaltung 18 nachgeordneten Ausgleichsschaltung 19 ermittelt.

Eine Anzeige 20 wird vom Detektor 13 und der Ausgleichsschaltung 19 angesteuert und gibt eine Lagedarstellung des Fahrzeugs in einem nordbezogenen Koordinatensystem an. Der Ort Z des Fahrzeugs befindet sich in Peilrichtung ϕ mit dem Radialabstand r zu einem Zeitpunkt t.

Der Rechenschaltung 18 oder Ausgleichsschaltung 19 ist eine Rechenstufe 21 nachgeordnet, in der die zu unterschiedlichen Zeitpunkten t₁, t₂, t₃ bestimmten Radialabstände r₁, r₂, r₃ abgspeichert werden. Zwischen den Zeitpunkten t₁ und t₂ bzw. t₂ und t₃ liegt jeweils ein Zeitintervall. In der Rechenstufe 21 wird die Differenz aufeinanderfolgender Radialabstände (r₂-r₁) bzw. (r₃ - r₂) gebildet und durch das Zeitintervall geteilt. Die Rechenstufe 21 liefert einen Gradienten, der eine radiale Geschwindigkeitskomponente des Fahrzeugs angibt. Die Rechenstufe 19 ist mit der Anzeige 20 verbunden, auf der nacheinander der Zielort Z₁, Z₂, Z₃ des Fahrzeugs mit den Radialabständen r₁, r₂, r₃ dargestellt und die zugehörige Geschwindigkeit auf einem Anzeigefeld 22 angegeben wird.

## Patentansprüche

1. Verfahren zur passiven Bestimmung von Zieldaten eines schallabstrahlenden Fahrzeugs mit einer linienförmigen Wandleranordnung mit kontinuierlich belegten Wandlern, die mit einer Peilanlage verbunden sind, wobei mit Empfangssignalen der Wandler über Laufzeit - und/oder Phasenverzögerungen Richtcharakteristiksignale gebildet werden und nach Detektion eine Peilrichtung zum Fahrzeug ermittelt wird, **dadurch gekennzeichnet, daß** eine Anzahl benachbarter Wandler zu einer Gruppe zusammengefaßt werden, daß aus Empfangssignalen der Gruppe durch Laufzeit - und/oder Phasenverzögerungen Fokussignale mit längs einem Peilstrahl (P) in Peilrichtung (ϕ) hintereinander aufgereihten Brennpunkten (B) gebildet werden, daß die Fokussignale miteinander verglichen werden und der Brennpunkt des größten Fokussignals den Ort (Z) des Fahrzeugs angibt.

2. Verfahren nach Anspruch 1, **dadurch gekennzeichnet, daß** als Wandleranordnung (10) eine Schleppantenne eingesetzt wird.

3. Verfahren nach Anspruch 1 oder 2, **dadurch gekennzeichnet, daß** mehrere Gruppen jeweils aus einer Anzahl von Wandlern zu benachbarten Teilbasen zusammengefaßt werden und für jede Teilbasis Teilfokussignale mit längs des Peilstrahls (P) in Peilrichtung (ϕ) zum Fahrzeug hintereinander aufgereihten Brennpunkten (B) gebildet werden, daß für jede Teilbasis die Teilfokussignale miteinander verglichen und das größte Teilfokussignal ausgewählt wird, daß aus den Brennpunkten (B) der größten Teilfokussignale aller Teilbasen auf dem zugehörigen Peilstrahl Radialabstände (r) zum Fahrzeug ermittelt werden, die den Ort (Z) des Fahrzeugs angeben.

4. Verfahren nach Anspruch 3, **dadurch gekennzeichnet, daß** durch Bilden des Mittelwerts der Radialabstände (r) der Ort (Z) des Fahrzeugs in Peilrichtung (ϕ) bestimmt wird.

5. Verfahren nach Anspruch 3, **dadurch gekennzeichnet, daß** durch Bilden des Medians der Radialabstände (r) der Ort (Z) des Fahrzeugs in Peilrichtung (ϕ) bestimmt wird.

6. Verfahren nach Anspruch 5, **dadurch gekennzeichnet, daß** ein erster Median der Radialabstände (r) über ein erstes Zeitintervall und ein zweiter Median über ein daran anschließendes zweites Zeitintervall gebildet wird, daß die Differenz des ersten und zweiten Medians durch das Zeitintervall geteilt wird und einen Gradienten bildet.

7. Verfahren nach Anspruch 6, **dadurch gekennzeichnet, daß** die Größe des Gradienten die radiale Geschwindigkeit des Fahrzeuges angibt.

8. Verfahren nach Anspruch 6, **dadurch gekennzeichnet, daß** zum zuletzt ermittelten Radialabstand des Fahrzeugs ein Produkt aus Gradient und Zeitspanne addiert wird und die Summe den momentanen Ort des Fahrzeugs angibt.

## Claims

1. Method for passively determining target data of a sound-emitting vessel with the aid of a linear transducer arrangement with continuously engaged transducers which are connected to a direction-finding system, directivity signals being formed with the aid of received signals of the transducers via travel time and/or phase delays, and a line of bearing with a vessel being determined after detection, **characterized in that** a number of neighbouring transducers are combined to form a group, **in that** focusing signals with focal points (B) lined up one behind the other along a direction-finding beam (P) in the line of bearing (ϕ) are formed from received signals of the group by means of travel time and/or phase delays, and **in that** the focusing signals are intercompared and the focal point of the largest focusing signal specifies the location (Z) of the vessel.

2. Method according to Claim 1, **characterized in that** a trailing antenna is used as transducer arrangement (10).

3. Method according to Claim 1 or 2, **characterized in that** a plurality of groups are combined in each case from a number of transducers to form neighbouring subbases, and component focusing signals with focal points (B) lined up one behind another along the direction-finding beam (P) in the line of bearing (ϕ) to the vessel are formed for each subbase, **in that** for each subbase the component focusing signals are intercompared and the largest component focusing signal is selected, and **in that** radial distances (r) from the vessel are determined from the focal points (B) of the largest component focusing signals of all subbases on the associated direction-finding beam and specify the location (Z) of the vessel.

4. Method according to Claim 3, **characterized in that** the location (Z) of the vessel is determined in the line of bearing (ϕ) by forming the mean value of the radial distances (r).

5. Method according to Claim 3, **characterized in that** the location (Z) of the vessel in the line of bearing (ϕ) is determined by forming the median of the radial distances (r).

6. Method according to Claim 5, **characterized in that** a first median of the radial distances (r) is formed over a first time interval, and a second median is formed over a second time interval, which follows the first, and **in that** the difference between the first and second medians is divided by the time interval and a gradient is formed.

7. Method according to Claim 6, **characterized in that** the magnitude of the gradient specifies the radial velocity of the vessel.

8. Method according to Claim 6, **characterized in that** a product of the gradient and periods is added to the last determined radial distance of the vessel, and the sum specifies the instantaneous location of the vessel.

## Revendications

1. Procédé pour la détermination passive de données de ciblage d'un véhicule rayonnant un son avec un arrangement linéaire de convertisseurs occupés en permanence, des signaux directionnels étant formés avec les signaux reçus par les convertisseurs par un retard du temps de propagation et/ou de phase et une direction de relèvement vers le véhicule étant déterminée après la détection, **caractérisé en ce qu'**un certain nombre de convertisseurs voisins sont réunis pour former un groupe, que des signaux de concentration ayant des foyers (B) alignés l'un derrière l'autre le long d'une ligne de relèvement (P) dans la direction du repérage (j) sont formés à partir des signaux reçus du groupe par retard de temps de propagation et/ou de phase, que les signaux de concentration sont comparés entre eux et le foyer du signal de concentration le plus grand indique l'emplacement (Z) du véhicule.

2. Procédé selon la revendication 1, **caractérisé en ce que** l'arrangement linéaire de convertisseurs (10) utilisé est une antenne remorquée.

3. Procédé selon la revendication 1 ou 2, **caractérisé en ce que** plusieurs groupes sont formés, composés chacun d'un certain nombre de convertisseurs faisant partie de bases partielles voisines et des signaux de concentration partiels ayant des foyers (B) alignés l'un derrière l'autre le long d'une ligne de relèvement (P) dans la direction du repérage (j) vers le véhicule sont formés pour chaque base partielle, que les signaux de concentration partiels de chaque base partielle sont comparés entre eux et l'on sélectionne le signal de concentration partiel le plus grand, que les distances radiales (r) du véhicule sur la ligne de relèvement correspondante, lesquelles indiquent l'emplacement (Z) du véhicule, sont déterminées à partir des foyers (B) des signaux de concentration partiels de toutes les bases partielles.

4. Procédé selon la revendication 3, **caractérisé en ce que** l'emplacement (Z) du véhicule dans la direction de repérage (j) est déterminé en calculant la valeur moyenne des distances radiales (r).

5. Procédé selon la revendication 3, **caractérisé en ce que** l'emplacement (Z) du véhicule dans la direction de repérage (j) est déterminé en calculant la médiane des distances radiales (r).

6. Procédé selon la revendication 5, **caractérisé en ce qu'**une première médiane des distances radiales (r) est calculée sur un premier intervalle de temps et une deuxième médiane des distances radiales (r) est calculée sur un deuxième intervalle de temps qui le suit, que la différence entre la première et la deuxième médiane est divisée par l'intervalle de temps et donne un gradient.

7. Procédé selon la revendication 6, **caractérisé en ce que** la grandeur du gradient indique la vitesse radiale du véhicule.

8. Procédé selon la revendication 6, **caractérisé en ce que** la dernière distance radiale déterminée du véhicule est additionnée au produit du gradient par l'intervalle de temps et la somme indique l'emplacement momentané du véhicule.
